# EUROPÄISCHE PATENTSCHRIFT

(11) **EP 3 068 805 B1**
(45) Veröffentlichungstag und Bekanntmachung des Hinweises auf die Patenterteilung: **09.08.2017**
(21) Anmeldenummer: 14793510.0
(22) Anmeldetag: 30.10.2014
(51) Int. Cl.: C08F 2/20, C04B 24/26, C08F 8/26, C08F 218/08

(54) **VERFAHREN ZUR HERSTELLUNG VON IN WASSER REDISPERGIERBAREN POLYMERPULVER-ZUSAMMENSETZUNGEN MIT KATIONISCHER FUNKTIONALITÄT**
PROCESS FOR PRODUCING WATER-REDISPERSIBLE POLYMER POWDER COMPOSITIONS HAVING CATIONIC FUNCTIONALITY
PROCÉDÉ DE PRÉPARATION DE COMPOSITIONS DE POUDRES POLYMÈRES À FONCTIONNALITÉ CATIONIQUE REDISPERSIBLES DANS L'EAU

(30) Priorität: 15.11.2013 DE 102013223305
(43) Veröffentlichungstag der Anmeldung: 21.09.2016
(73) Patentinhaber: Wacker Chemie AG, 81737 München (DE)
(72) Erfinder: SEIDEL, Jessica, 84539 Zangberg (DE)
(74) Vertreter: Schuderer, Michael
(86) Internationale Anmeldenummer: PCT/EP2014/073364
(87) Internationale Veröffentlichungsnummer: WO 2015/071108

(56) Entgegenhaltungen:
- WO-A1-2007/093551
- DE-B3-102005 050 201

## Beschreibung

Die Erfindung betrifft ein Verfahren zur Herstellung von in Wasser redispergierbaren Polymerpulver-Zusammensetzungen mit kationischer Funktionalität, mit dem Verfahren erhältliche in Wasser redispergierbare Polymerpulver-Zusammensetzungen mit kationischer Funktionalität, sowie deren Verwendung.

In Wasser redispergierbare Polymerpulver (Dispersionspulver) sind Polymerpulver, welche im allgemeinen durch Trocknung der entsprechenden wässrigen Polymerdispersionen, in Gegenwart von einer Trocknungshilfe (im allgemeinen ein Schutzkolloid) erhalten werden. Aufgrund des Schutzkolloidanteils wird zum einen beim Trocknungsvorgang verhindert, dass die Polymerteilchen irreversibel verkleben, da die Polymerteilchen von den wasserlöslichen Schutzkolloid-Teilchen umhüllt werden. Zum anderen bewirkt diese Schutzkolloid-Matrix, welche sich beim Dispergieren des Polymerpulvers in Wasser wieder auflöst, dass die Polymerpartikel wieder mit der Partikelgröße der Ausgangsdispersion in der wässrigen Redispersion vorliegen.

Solche Dispersionspulver werden vor allem in bauchemischen Produkten, beispielsweise in Trockenmörtelformulierungen, eingesetzt, welche durch Zugabe von Wasser gebrauchsfertig gemacht werden. Der Zusatz der Dispersionspulver führt zu einer Verbesserung der Verarbeitbarkeit der Mörtel und zu höherer mechanischer Festigkeit der abgebundenen Mörtel.

Aus dem Stand der Technik ist bereits bekannt, dass zur Herstellung von in Wasser redispergierbaren Polymerpulvern auch Schutzkolloide mit kationischer Funktionalität eingesetzt werden können. Aus der WO 00/05275 A1 ist ein Verfahren bekannt, bei dem kationische Monomere in wässrigem Medium polymerisiert werden und in Gegenwart des dabei in-situ gebildeten Polymerisats weitere Monomere polymerisiert werden. Die damit erhaltene Polymerdispersion wird dann in Gegenwart von Polyvinylalkohol sprühgetrocknet. Ein dazu analoges Verfahren wird in der WO 00/05283 A1 beschrieben, wobei hier das Verfahren so gesteuert wird, dass Copolymerisatteilchen mit heterogener Morphologie gebildet werden.

Die EP 0770640 A2 beschreibt ein Verfahren zur Herstellung von Dispersionspulvern durch Trocknung einer wässrigen Polymerdispersion. Wesentlich ist dabei, dass die in Wasser dispergierten Polymerteilchen eine positive oder negative Oberflächenladung aufweisen und mit einem Trocknungshilfsmittel getrocknet werden, dessen Ladung entgegengesetzt ist zur Ladung der Polymerteilchen der wässrigen Polymerdispersion.

Die WO 98/13411 A1 beschreibt die Herstellung von Polymerpulvern durch Sprühtrocknung eines Emulsionspolymerisates, das anionische Gruppen aufweist, mit einem amphoteren Polymer natürlicher Herkunft (Polysaccharide, vorzugsweise Casein, Gelatine und Proteine) oder synthetischer Natur (Copolymere aus Acrylsäureestern und ungesättigten Carbonsäuren mit tertiären oder quartären Ammoniumgruppen in der Seitenkette).

In der WO 2007/093551 A1 werden in Wasser redispergierbare Polymerpulver beschrieben, welche dadurch erhalten werden, dass eine Polymerdispersion in Gegenwart eines kationischen Schutzkolloids als Trocknungshilfe getrocknet wird. Als kationische Schutzkolloide werden Polymerisate von Monomeren mit quarternären Ammoniumgruppen und einem Halogenid-Gegenion, insbesondere einem Chloridion, eingesetzt. Im Vergleich mit Dispersionspulvern, welche mit Polyvinylalkohol als Trocknungshilfe getrocknet wurden, zeichnen sich diese Pulver durch bessere Verarbeitbarkeit bei der Herstellung von Mörtelmassen aus. Die mechanische Festigkeit der damit erhaltenen Mörtelmassen ist allerdings verbesserungswürdig.

Aufgabe war es daher eine kationische Polymerpulverzusammensetzung mit verbesserten mechanischen Eigenschaften in damit modifizierten Baustoffmassen zu entwickeln, bei der wasserlösliche kationische Schutzkolloide ohne Einschränkung eingesetzt werden können.

Gegenstand der Erfindung ist ein Verfahren zur Herstellung von in Wasser redispergierbaren Polymerpulver-Zusammensetzungen mit kationischer Funktionalität, wobei ein oder mehrere ethylenisch ungesättigte Monomere in Gegenwart von Schutzkolloid und/oder Emulgator in wässrigem Medium radikalisch polymerisiert werden, und die dabei erhaltene wässrige Polymerdispersion nach Zusatz eines kationischen Schutzkolloids als Trocknungshilfe getrocknet wird, dadurch gekennzeichnet, dass als kationisches Schutzkolloid Homo- oder Mischpolymerisate von einem oder mehreren kationischen Monomeren mit quarternärer Ammoniumhalogenidgruppe eingesetzt werden, wobei 50 Gew.-% bis 100 Gew.-% der Halogenidionen der quarternären Ammoniumhalogenidgruppen gegen Nichthalogenid-Anionen ausgetauscht sind, und der Anteil an Halogenidionen kleiner 1 Gew.-%, bezogen auf das Gesamtgewicht der Polymerpulver-Zusammensetzung, ist.

Die in diesem Verfahren eingesetzten kationischen Schutzkolloide auf Basis von Homo- oder Mischpolymerisaten von einem oder mehreren kationischen Monomeren mit quarternärer Ammoniumhalogenidgruppe, bei welchen 50 Gew.-% bis 100 Gew.-% der Halogenidionen der quarternären Ammoniumgruppen gegen Nichthalogenid-Anionen ausgetauscht sind, und bei deren Einsatz als Trocknungshilfe der Anteil an Halogenidionen kleiner 1 Gew.-%, bezogen auf das Gesamtgewicht der Polymerpulver-Zusammensetzung, ist, werden im Folgenden auch als halogenidarme, kationische Schutzkolloide bezeichnet.

Für die Herstellung der halogenidarmen, kationischen Schutzkolloide geeignete kationische Schutzkolloide sind beispielsweise in E.W. Flick, Water-Soluble Resins - an Industrial Guide, Noyes Publications, Park Ridge, N.J., 1991 beschrieben. Bevorzugt werden Homo- oder Mischpolymerisate von einem oder mehreren kationischen Monomeren aus der Gruppe umfassend Diallyldimethylammoniumchlorid (DADMAC), Diallyldiethylammoniumchlorid (DADEAC), (3-Methacryloxy)propyltrimethylammoniumchlorid (MPTAC), (2-Methacryloxy)ethyltrimethylammoniumchlorid (METAC), (3-Methacrylamido)propyltrimethylammoniumchlorid (MAPTAC).

Im Allgemeinen enthalten die kationischen Schutzkolloide 10 bis 100 Gew.-%, vorzugsweise 50 bis 100 Gew.-%, mehr bevorzugt 60 bis 100 Gew.-%, besonders bevorzugt 90 bis 100 Gew.-%, am meisten bevorzugt etwa 100 Gew.-%, Monomereinheiten mit quarternärer Ammoniumgruppe, bezogen auf das Gesamtgewicht des kationischen Schutzkolloids. Geeignete nichtionische, copolymerisierbare Monomere sind Vinylester mit 1 bis 15 C-Atomen im Carbonsäurerest, wie Vinylacetat, Vinylpropionat, Vinyldodecanoat; Acrylamid, Hydroxyethyl(meth)acrylat, Hydroxypropyl(meth)acrylat, Ester der Methacrylsäure und Acrylsäure mit Alkoholen mit 4 bis 13 C-Atomen, Polyalkylenglykol-(meth)acrylate mit C₂- bis C₄-Alkyleneinheiten und Molekulargewichten von 350 bis 2000 g/mol, sowie N-Vinylpyrrolidon, N-Vinylcaprolactam, Acryloxypropyltrialkoxy- und Methacryloxypropyltrialkoxysilane wie Methacryloxypropyltrimethoxysilan, Vinyltrialkoxysilane wie Vinyltrimethoxysilan oder Vinyltriethoxysilan, und Vinylmethyldialkoxysilane wie Vinylmethyldimethoxysilan, und/oder Mischungen der genannten nichtionischen Comonomere.

Die kationischen Schutzkolloide mit quarternären Ammoniumgruppen können mittels dem Fachmann bekannter Polymerisationsverfahren hergestellt werden, beispielsweise durch freie radikalische Polymerisation in wässriger Lösung, in Lösungsmittelgemischen oder in Gegenwart von Salzen, beispielsweise auch in Fällungspolymerisation, beispielsweise in Suspension oder beispielsweise durch inverse Emulsionspolymerisation. Die Initiatoren können hierbei wasserlöslich oder öllöslich sein und aus der Gruppe der Persulfate, Peroxide, Azo-Verbindungen sowie der Oxidations/Reduktionsinitiatorpaare stammen. Vor allem mit der zuletzt genannten Methode der inversen Emulsionspolymerisation bzw. Wasser-in-Öl-Polymerisation werden extrem hochmolekulare kationische Polymere mit Molekulargewichten von > 5.000.000 g/mol erreicht.

Am meisten bevorzugt wird die Herstellung durch Lösungspolymerisation in Wasser mit geringen Festgehalten (vorzugsweise ≤ 40 Gew.-%) in Gegenwart von wasserlöslichen Initiatoren wie Azoinitiatoren oder Redoxinitiatoren, gegebenenfalls in Gegenwart von Molekulargewichtsreglern wie Mercaptopropionsäure oder 2-Mercaptoethanol.

Für die Herstellung der halogenidarmen, kationischen Schutzkolloide geeignete kationische Schutzkolloide sind auch kommerziell erhältlich. Beispielsweise wird Poly-Diallyldimethylammoniumchlorid (Poly-DADMAC) als Catiofast BP (BASF) oder Superfloc® C-592 (Kemira, Water Solutions B.V) angeboten.

Zur Herstellung der halogenidarmen, kationischen Schutzkolloide kann eine Halogenidionen-Reduzierung im kationischen Schutzkolloid mittels dem Fachmann bekannter Verfahren erfolgen. Beispielsweise mittels aus der DE 102005050201 B3 bekannten Ionenaustauscher-Verfahren, wie Anionenaustausch unter Verwendung eines Anionentauscher-Harzes, oder Membranfiltrationsverfahren, insbesondere Nanofiltration. Beim Nanofiltrationsverfahren wird die wässrige kationische Schutzkolloidlösung über eine Nanofiltrationsmembran im Kreislauf geführt und dem polymerhaltigen Retentat eine nichthalogenidhaltige anorganische Salzlösung in der Menge zugeführt, wie halogenidhaltiges Permeat über die Nanofiltrationsmembran abgeschieden wird. Das Halogenidion, im allgemeinen Chlorid, wird dabei gegen ein Nichthalogenidion, beispielsweise Sulfat, Nitrat, Acetat, Thiosulfat oder Sulfit, ausgetauscht. Vorzugsweise wird das Halogenidion gegen ein Sulfat- oder Thiosulfation ausgetauscht. Im Allgemeinen werden 50 bis 100 Gew.-% der Halogenidionen, vorzugsweise 80 bis 100 Gew.-% der Halogenidionen, am meisten bevorzugt 80 bis 95 Gew.-% der Halogenidionen, jeweils bezogen auf das Gesamtgewicht der Halogenidionen im kationischen Schutzkolloid, ausgetauscht. Die Viskosität der für die Nanofiltration eingesetzten kationischen Polymerlösungen liegt typischerweise im Bereich von 50 bis 400 mPas, vorzugsweise im Bereich von 70 bis 150 mPas (Brookfield-Viskosität nach ISO 2555, 20 Upm, 23°C, mit der für den entsprechenden Viskositätsbereich empfohlenen Spindel). Die Viskosität der kationischen Polymerlösung ist durch Verdünnung mit vollentsalztem Wasser auf den bevorzugten Viskositätsbereich einzustellen.

Für die Herstellung der wässrigen Polymerdispersion des filmbildenden Basispolymers geeignete Monomere sind Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen, beispielsweise VeoVa9® oder VeoVa10® (Handelsnamen der Firma Momentive). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein bevorzugtes Vinylhalogenid ist Vinylchlorid.

Gegebenenfalls können noch 0,05 bis 50 Gew.-%, vorzugsweise 1 bis 10 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri-(alkoxy)-Silane wie Methacryloxypropyltrimethoxysilan, Vinyltrialkoxysilane und Vinylmethyldialkoxysilane wie Vinyltrimethoxysilan oder Vinyltriethoxysilan oder Vinylmethyldimethoxysilan, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere geeignete Comonomere sind Vinylalkylether, wie beispielsweise Vinylmethylether, Vinylethylether, Vinylisobutylether, Vinyloctadecylether.

Beispiele für als Basispolymerisat geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate;
Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyldodecanoat, Vinylester von alpha-verzweigten Carbonsäuren mit 9 bis 13 C-Atomen wie VeoVa9®, VeoVa10®, VeoVa11®;
Mischpolymerisate von Vinylacetat mit 1 bis 50 Gew.-% von einem oder mehreren weiteren Comonomeren aus der Gruppe Vinylester mit 1 bis 15 C-Atomen im Carbonsäurerest wie Vinylpropionat, Vinyldodecanoat, Vinylester von alpha-verzweigten Carbonsäuren mit 9 bis 13 C-Atomen wie VeoVa9®, VeoVa10®, VeoVa11®; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat;
Mischpolymerisate von 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche gegebenenfalls noch 1 bis 40 Gew.-% Ethylen enthalten können;
Mischpolymerisate von Vinylacetat, 1 bis 40 Gew.-% Ethylen und 1 bis 60 Gew.-% Vinylchlorid;
Mischpolymerisate von einem oder mehreren Vinylestern mit 1 bis 12 C-Atomen im Carbonsäurerest wie Vinylacetat, Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, 1 bis 40 Gew.-% Ethylen und 1 bis 60 Gew.-% Vinylchlorid;
wobei jeweils noch die genannten Hilfsmonomere in den genannten Mengen copolymerisiert werden können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Mischpolymerisate von Methylmethacrylat mit n-Butylacrylat und/oder 2-Ethylhexylacrylat und gegebenenfalls Ethylen; Styrol-(Meth)acrylsäureester-Mischpolymerisate von einem oder mehreren Monomeren aus der Gruppe Methylacrylat, Ethylacrylat, Propylacrylat, n-Butylacrylat, 2-Ethylhexylacrylat; Vinylacetat-(Meth)acrylsäureester-Mischpolymerisate von einem oder mehreren Monomeren aus der Gruppe Methylacrylat, Ethylacrylat, Propylacrylat, n-Butylacrylat, 2-Ethylhexylacrylat und gegebenenfalls Ethylen;
Mischpolymerisate von Styrol und 1,3-Butadien;
wobei jeweils noch die genannten Hilfsmonomere in den genannten Mengen copolymerisiert werden können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +10°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt bevorzugt nach dem Emulsionspolymerisationsverfahren, wobei die Polymerisationstemperatur im allgemeinen, aber nicht notwendigerweise < 100°C beträgt.

Die Polymerisation kann unabhängig vom Polymerisationsverfahren mit oder ohne Verwendung von Saatlatices, unter Vorlage aller oder einzelner Bestandteile des Reaktionsgemisches, oder unter teilweiser Vorlage und Nachdosierung des oder einzelner Bestandteile des Reaktionsgemische, oder nach dem Dosierverfahren ohne Vorlage durchgeführt werden. Die Comonomere können zur Herstellung der Dispersion alle vorgelegt werden (Batch-Prozess), oder es wird ein Teil der Monomere vorgelegt und der Rest dosiert (Semibatch-Prozess).

Die Initiierung der Polymerisation erfolgt mit den für die Emulsionspolymerisation gebräuchlichen wasserlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, tert.-Butylhydroperoxid, Kaliumperoxodiphosphat, Cumolhydroperoxid, Isopropylbenzolmonohydroperoxid. Die genannten Initiatoren werden im allgemeinen in einer Menge von 0,001 bis 0,02 Gew.-%, vorzugsweise 0,001 bis 0,01 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, Ascorbinsäure, und Gemische der Salze der 2-Hydroxy-2-Sulfinato-Essigsäure und 2-Hydroxy-2-Sulfonato-Essigsäure mit Natriumsulfit. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Polymerisation erfolgt vorzugsweise in Gegenwart von nichtionischem Schutzkolloid. Geeignete nichtionische Schutzkolloide sind Polyvinylalkohole, Polyvinylacetale, Polyvinylpyrrolidone, Polysaccharide in wasserlöslicher Form wie Stärken (Amylose und Amylopectin),Cellulosen und deren Methyl-, Hydroxyethyl-, Hydroxypropyl-Derivate, Poly(meth)acrylamid.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 13 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden teilverseifte Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im allgemeinen in einer Menge von insgesamt 1 bis 20 Gew.-%, bezogen auf das Gesamtgewicht der Monomere, bei der Polymerisation zugesetzt.

Gegebenenfalls können auch Mischungen mit einem oder mehreren nichtionischen Schutzkolloiden und mit einem oder mehreren halogenidarmen, kationischen Schutzkolloiden eingesetzt werden, wobei die als Trocknungshilfe genannten halogenidarmen, kationischen Schutzkolloide verwendet werden können.

Die Polymerisation kann auch in Gegenwart von nichtionischem Emulgator durchgeführt werden, oder in Gegenwart der genannten nichtionischen Schutzkolloide in Kombination mit nichtionischem Emulgator, oder in Gegenwart der genannten nichtionischen Schutzkolloide in Kombination mit nichtionischem Emulgator und halogenidarmem, kationischem Schutzkolloid.

Geeignete nichtionische Emulgatoren sind Tenside wie Alkylpolyglykolether oder Alkylarylpolyglykolether mit 8 bis 40 Alkylenoxid-Einheiten. Bevorzugt werden alkoxylierte C₈- bis C₁₆-Alkanole, welche mit C₂- bis C₄-Alkylenoxiden, insbesondere Ethylenoxid und Propylenoxid oder deren Gemische, alkoxyliert sind. Die nichtionischen Emulgatoren werden im allgemeinen in einer Menge von 0,05 bis 10 Gew.-%, bezogen auf das Gesamtgewicht der Monomere, bei der Polymerisation zugesetzt.

Vorzugsweise wird während der Polymerisation nur nichtionisches Schutzkolloid und/oder nichtionischer Emulgator eingesetzt.

Nach Abschluss der Polymerisation kann zur Restmonomerentfernung in Anwendung bekannter Methoden nachpolymerisiert werden, im allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von Luft oder Wasserdampf oder von inerten Schleppgasen wie Stickstoff entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver mit kationischer Funktionalität werden die wässrigen Polymerdispersionen, nach Zusatz der halogenidarmen, kationischen Schutzkolloide als Trocknungshilfe, getrocknet. Das halogenidarme, kationische Schutzkolloid kann dabei auch in Kombination mit nichtionischem Schutzkolloid eingesetzt werden. Dazu geeignete nichtionische Schutzkolloide sind die bereits vorher bei der Polymerisation als geeignet genannten nichtionischen Schutzkolloide. Vorzugsweise wird in einer solchen Kombination als nichtionisches Schutzkolloid teilverseifter Polyvinylalkohol mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015), besonders bevorzugt teilverseifter Polyvinylalkohol mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015) eingesetzt. Das Gewichtsverhältnis in einer solchen Kombination aus halogenidarmem, kationischem Schutzkolloid und aus nichtionischem Schutzkolloid kann von 90 : 10 bis 10 : 90 betragen, vorzugsweise von 70 :30 bis 30 : 70.

In der Regel wird die Trocknungshilfe in einer Menge von insgesamt 0,1 bis 20 Gew.-%, bevorzugt 1 bis 7 Gew.-%, jeweils bezogen auf die polymeren Bestandteile der Dispersion, eingesetzt.

Die Trocknung erfolgt beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage und gewünschtem Trocknungsgrad, gewählt.

Bei der Trocknung hat sich vielfach ein Gehalt von bis zu 2 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaoline, Silicate mit Teilchengrößen vorzugsweise im Bereich von 10 nm bis 100 µm.

Die Viskosität der zu zerstäubenden und zu trocknenden Mischung kann über den Feststoffgehalt so eingestellt werden, dass ein Wert von < 1000 mPas (Brookfield-Viskosität bei 20 Umdrehungen und 23°C), bevorzugt < 500 mPas, vor allem bevorzugt < 250 mPas erhalten wird. Der Feststoffgehalt der zu zerstäubenden Mischung sollte > 30 Gew.-%, bevorzugt > 40 Gew.-% betragen.

Zur Verbesserung der anwendungstechnischen Eigenschaften können vor oder während oder nach der Trocknung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel, Weichmacher.

Die erfindungsgemäß erhaltenen, in Wasser redispergierbaren Polymerpulver-Zusammensetzungen mit kationischer Funktionalität können in den dafür typischen Anwendungsbereichen eingesetzt werden. Es können auch Abmischungen der Dispersionspulver mit kationischer Funktionalität mit herkömmlichen Dispersionspulvern eingesetzt werden.

Beispiele für Anwendungen sind die in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber (beispielsweise Hochflexkleber) und Vollwärmeschutzkleber, Putzen, Spachtelmassen, Fußbodenspachtelmassen, Verlaufsmassen, Dichtschlämmen, Fugenmörtel und Farben. Bevorzugte Anwendungsgebiete sind Dichtschlämmen und Fliesenkleber, insbesondere auch Fliesenkleber für Holzuntergründe. Weitere mögliche Anwendungen ergeben sich durch den Einsatz im Klebstoff- und Coatingbereich, letztere beispielsweise für Papier und Textil.

Überraschenderweise wurde festgestellt, dass der Einsatz dieser in Wasser redispergierbaren Polymerpulver-Zusammensetzungen mit kationischer Funktionalität zu einer deutlichen Verbesserung der mechanischen Eigenschaften führt, wie am Beispiel von Dichtschlämmen gezeigt wurde.

### Beispiele:

Für die Herstellung der erfindungsgemäßen Polymerpulver wurden die im folgenden beschriebenen Ausgangsdispersionen und Schutzkolloide eingesetzt.

Herstellung des halogenidarmen, kationischen Schutzkolloids (SK1) :
Als Edukt wurde Superfloc® C-592 der Firma Kemira, Water Solutions B.V eingesetzt, eine 39 Gew.-%-ige wässrige Lösung von Poly-Diallyldimethylammoniumchlorid, mit einem Chloridgehalt von 22 Gew.-%. Die 39 Gew.-%-ige wässrige Lösung wurde mit vollentsalztem Wasser auf 10 Gew.-% verdünnt. Zur Reduktion der Chloridionen wurde eine Membranfiltration über eine Nanofiltrationsmembran (Semicon, Nitto Denko NTR-7450 HG F4T) durchgeführt. In Gegenwart einer 10 %-igen Natriumthiosulfat-Lösung wurde die wässrige Lösung im Kreislauf über die genannte Nanofiltrationsmembran geschickt (Retentat) und die Menge an abgetrenntem Permeat in Form von vollentsalztem Wasser dem Kreislauf zurückgeführt. Die Membranfiltration wurde solange durchgeführt bis der Chloridgehalt des Poly-Diallyldimethylammoniumchlorids, durch Austausch der Chloridionen gegen Thiosulfationen auf 4,4 Gew.-% reduziert war. Der Anteil an Chloridionen wurde damit um 80 Gew.-% reduziert. Im Anschluss an den Ionenaustausch-Prozess wurde die Konzentration des Retentat auf 20 Gew.-% aufkonzentriert, indem nur Permeat abgeführt wird, vollentsalztes Wasser dem Kreislauf aber nicht wieder zugeführt wird.

### Dispersion A:

Wässrige Polymerdispersion auf Basis eines Vinylacetat-EthylenCopolymers, hergestellt mit 6 Gew.-%, bezogen auf das Gesamtgewicht der Monomere, Polyvinylalkohol mit einem Verseifungsgrad von 88 Mol-% und einer Viskosität nach Höppler einer 4 %-igen wässrigen Lösung von 4 mPas, mit einem Feststoffgehalt der Polymerdispersion von 53 % und einer Tg von -6°C.

### Dispersion B:

Wässrige Polymerdispersion auf Basis eines Vinylacetat-Ethylen-VeoVa10-Copolymers, hergestellt mit 5 Gew.-%, bezogen auf das Gesamtgewicht der Monomere, Polyvinylalkohol mit einem Verseifungsgrad von 88 Mol-% und einer Viskosität nach Höppler einer 4 %-igen wässrigen Lösung von 4 mPas, mit einem Feststoffgehalt der Polymerdispersion von 50 % und einer Tg von -15°C.

### Dispersion C:

Wässrige Polymerdispersion auf Basis eines Vinylacetat-EthylenCopolymers, hergestellt mit 5,5 Gew.-%, bezogen auf das Gesamtgewicht der Monomere, Polyvinylalkohol mit einem Verseifungsgrad von 88 Mol-% und einer Viskosität nach Höppler einer 4 %-igen wässrigen Lösung von 4 mPas und mit 0,5 Gew.-% (Trockenanteil), bezogen auf das Gesamtgewicht der Monomere, Schutzkolloid SK1, mit einem Feststoffgehalt der Polymerdispersion von 53 % und einer Tg von -5°C.

### Schutzkolloid - SK1:

20 %-ige wässrige Lösung von Poly-Diallyldimethylammoniumchlorid mit einem Anteil an Chloridionen von 4,4 Gew.-%, und mit einer Höppler-Viskosität einer 4 %-igen wässrigen Lösung von 7 mPas.

### Schutzkolloid - SK2:

Wässrige Polyvinylalkohol-Lösung mit einem Verseifungsgrad von 88 Mol-% und einer Höppler-Viskosität einer 4 %-igen wässrigen Lösung von 4 mPas.

### Schutzkolloid - SK3:

Wässrige Polyvinylalkohol-Lösung mit einem Verseifungsgrad von 88 Mol-% und einer Höppler-Viskosität einer 4 %-igen wässrigen Lösung von 13 mPas.

### Schutzkolloid - SK4:

39 %-ige wässrige Lösung von Poly-Diallyldimethylammoniumchlorid mit einem Anteil an Chloridionen von 22 Gew.-%, und mit einer Viskosität nach Höppler einer 4 %-igen Lösung in Wasser von 12,2 mPas (Superfloc® C-592 der Firma Kemira, Water Solutions B.V).

### Beispiele 1 bis 6:

Die Ausgangsdispersionen A bis C wurden jeweils mit den Schutzkolloiden SK1 bis SK3 entsprechend den in Tabelle 1 angegebenen Mengen (Trockenmasse) unter Zugabe von 0,3 Gew.-% Entschäumer (Silfoam S860 der Fa. Wacker Chemie), bezogen auf den festen Anteil der Dispersion, vermischt, 30 min gerührt und abfiltriert. Bei keinem der Beispiele 1 bis 6 wurde Koagulat gebildet. Die Mischungen wurden unter Zugabe von 15 Gew.-% Antiblockmittel (Calciumcarbonat, Omyacarb 5GU), bezogen auf den festen Anteil der Dispersion, sprühgetrocknet.

### Vergleichsbeispiel 7:

Die Ausgangsdispersion A wurde mit dem Schutzkolloid SK 4 in dem in Tabelle 1 angegebenen Mengen (Trockenmasse) unter Zugabe von 0,3 Gew.-% Entschäumer (Silfoam S860), bezogen auf den festen Anteil der Dispersion, vermischt, 30 min gerührt und abfiltriert. Die Mischung wurde unter Zugabe von 15 Gew.-% Antiblockmittel (Calciumcarbonat, Omyacarb 5GU), bezogen auf den festen Anteil der Dispersion, sprühgetrocknet.

**Tabelle 1: Pulverzusammensetzung**

| Beispiel | Dispersion | Schutzkolloid (% = Gew.-% Schutzkolloid bezogen auf den polymeren Anteil der Dispersion) |
|---|---|---|
| 1 | A | 6 % SK 1 |
| 2 | A | 3 % SK1, 1,5 % SK2, 1,5 % SK3 |
| 3 | B | 6 % SK 1 |
| 4 | B | 3 % SK1, 1,5 % SK2, 1,5 % SK3 |
| 5 | C | 6 % SK 1 |
| 6 | C | 3 % SK1, 1,5 % SK2, 1,5 % SK3 |
| V7(V.bsp.) | A | 6 % SK 4 |

### Ausprüfung:

Die erhaltenen Pulver wurden jeweils auf ihre Pulvereigenschaften und auf die Verarbeitung in einer Dichtschlämme untersucht.

### Bestimmung der Blocknote:

Zur Bestimmung der Blockfestigkeit wurde das Dispersionspulver in ein Eisenrohr mit Verschraubung gefüllt und danach mit einem Metallstempel belastet. Unter Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt. Die Blockstabilität wurde wie folgt klassifiziert:
1 = sehr gute Blockstabilität, keine Klumpenbildung
2 = gute Blockstabilität
3 = befriedigende Blockstabilität
4 = nicht blockstabil, Pulver nach Zerdrücken nicht mehr rieselfähig.

### Bestimmung des Absitzverhaltens (Röhrenabsitz):

Das Absitzverhalten der Redispersion dient als Maß für die Redispergierbarkeit der Pulvers. Die Redispersionen wurden mit den jeweiligen Dispersionspulvern 50 Gew.-%-ig in Wasser durch Einwirkung von starken Scherkräften erzeugt. Das Absitzverhalten wurde dann jeweils mit den verdünnten Redispersionen (0,5 Gew.-% Festgehalt) bestimmt. Jeweils 100 ml dieser Redispersionen wurden in eine graduierte Röhre gefüllt und die Absitzhöhe an Feststoff gemessen. Die Angabe erfolgt in mm Absitz nach 1 Stunde und nach 24 Stunden. Werte größer 1 mm nach 1 Stunde und Werte größer 3 nach 24 h zeigen eine unzureichende Redispersion des Polymerpulvers an.

Die Ergebnisse der Prüfung der Blocknote und des Röhrenabsitzes der Dispersionspulver sind in Tabelle 2 zusammengefasst.

**Tabelle 2: Pulvereigenschaften**

| Beispiel | Chloridgehalt (Gew.-% im kation. SK / in der Polymerzusammensetzung) | Blocknote | Röhrenabsitz nach 1h | Röhrenabsitz nach 24h |
|---|---|---|---|---|
| 1 | 4,4 / 0,26 | 2 | 0,8 | 1,9 |
| 2 | 4,4 / 0,13 | 1,5 | 0,3 | 0,9 |
| 3 | 4,4 / 0,26 | 2,5 | 0,2 | 1,0 |
| 4 | 4,4 / 0,13 | 2,5 | 0,2 | 0,7 |
| 5 | 4,4 / 0,23 | 2 | 0,2 | 0,9 |
| 6 | 4,4 / 0,13 | 1,5 | 0,2 | 0,7 |
| V7(V.bsp.) | 22,0 / 1,32 | 3 | 1,0 | 1,8 |

Für die Herstellung einer zementären Dichtschlämme wurde folgende Rezeptur herangezogen:

| | |
|---|---|
| Quarzsand | 665 Teile |
| Portlandzement | 50 Teile |
| Cellulose | 5 Teile |
| Dispersionspulver | 280 Teile |
| Wasser | 400 Teile |

Die Haftzugfestigkeit (HZF) im Verbund wurde jeweils nach folgenden Lagerungsbedingungen (DIN CEN 1897) geprüft:
28 Tagen Normklimalagerung bei 23°C und 50 % Luftfeuchte (28d NK) = trocken,
7 Tagen Normklimalagerung und 21 Tagen Wasserlagerung bei 23°C (7d NK + 21d Wasser) = nass

Die Ausprüfung erfolgte nach EN 1348. Dazu wurde der Mörtel jeweils mit einer Schablone (50 mm Durchmesser, 10 mm Dicke) auf eine Betonplatte aufgetragen, und die Prüfkörper wurden wie oben angegeben gelagert. Danach wurden mit Epoxidklebstoff Metallzuganker auf die zu prüfende Mörtelschicht aufgeklebt, um die Haftzugprüfung durchzuführen. Diese erfolgte mit einem Abzugsgerät der Firma Herion mit einer Laststeigerungsrate von 250 N/s. Die Messwerte in N/mm² stellen Mittelwerte aus 5 Messungen dar.

Die Bestimmung der Zugfestigkeit (ZF) und der Zugdehnung (ZD) aus dem Zugversuch erfolgte mit einem Normstab 3 (1B) nach DIN ISO 527 mit einer Zuggeschwindigkeit von 50 mm/min, jeweils nach
28 Tagen Normklimalagerung bei 23°C und 50 % Luftfeuchte (28d NK) = trocken,
7 Tagen Normklimalagerung und 21 Tagen Wasserlagerung bei 23°C (7d NK + 21d H₂O) = nass

Die Ergebnisse zur Haftzugfestigkeit im Verbund, Zugfestigkeit und Zugdehnung sind in Tabelle 3 wiedergegeben.

**Tabelle 3: Anwendungseigenschaften in der Dichtschlämme**

| Beispiel | HZF trocken | HZF nass | ZF trocken | ZF nass | ZD trocken | ZD nass |
|---|---|---|---|---|---|---|
| | (N/mm²) | (N/mm²) | (N/mm²) | (N/mm²) | (%) | (%) |
| 1 | 1,57 | 1,01 | 1,30 | 0, 40 | 42, 9 | 9,6 |
| 2 | 1,96 | 1,18 | 1, 67 | 0,43 | 52, 6 | 13,2 |
| 3 | 1,52 | 1, 05 | 1,22 | 0,37 | 51,2 | 11,4 |
| 4 | 1, 68 | 1,12 | 1,63 | 0,39 | 45,0 | 14, 8 |
| 5 | 1,55 | 1,10 | 1,25 | 0,38 | 55,3 | 15,7 |
| 6 | 1,87 | 1,18 | 1, 62 | 0,41 | 51,7 | 15,1 |
| V7(Vbsp.) | 1,36 | 0,77 | 1,2 | 0,22 | 39,8 | 6,2 |

Die Ergebnisse der dargelegten Beispiele zeigen, dass durch Einsatz halogenidarmer, kationischer Schutzkolloide blockstabile und gut in Wasser redispergierbare Polymerpulver erhalten werden (Tabelle 2). Erstaunlicherweise wurde gefunden, dass die erfindungsgemäßen Polymerpulverzusammensetzungen zudem verbesserte mechanische Eigenschaften bewirken: Vergleich von Beispiel 1 und Vergleichsbeispiel 7 in Tabelle 3.

Die verbesserten mechanischen Eigenschaften zeigen sich insbesondere nach der Nasslagerung. Eine weitere Verbesserung erhält man mit einer Kombination von halogenidarmem, kationischem Schutzkolloid und Polyvinylalkohol als Trocknungshilfe: Vergleich von Beispiel 1 und Beispiel 2.

## Patentansprüche

1. Verfahren zur Herstellung von in Wasser redispergierbaren Polymerpulver-Zusammensetzungen mit kationischer Funktionalität, wobei ein oder mehrere ethylenisch ungesättigte Monomere in Gegenwart von Schutzkolloid und/oder Emulgator in wässrigem Medium radikalisch polymerisiert werden, und die dabei erhaltene wässrige Polymerdispersion nach Zusatz eines kationischen Schutzkolloids als Trocknungshilfe getrocknet wird, **dadurch gekennzeichnet, dass** als kationisches Schutzkolloid Homo- oder Mischpolymerisate von einem oder mehreren kationischen Monomeren mit quarternärer Ammoniumhalogenidgruppe eingesetzt werden, wobei 50 Gew.-% bis 100 Gew.-% der Halogenidionen der quarternären Ammoniumhalogenidgruppen gegen Nichthalogenid-Anionen ausgetauscht sind, und der Anteil an Halogenidionen kleiner 1 Gew.-%, bezogen auf das Gesamtgewicht der Polymerpulver-Zusammensetzung, ist.

2. Verfahren nach Anspruch 1, **dadurch gekennzeichnet, dass** als kationisches Schutzkolloid Homo- oder Mischpolymerisate von einem oder mehreren kationischen Monomeren aus der Gruppe umfassend Diallyldimethylammoniumchlorid (DADMAC), Diallyldiethylammoniumchlorid (DADEAC), (3-Methacryloxy)propyltrimethylammoniumchlorid (MPTAC),(2-Methacryloxy)ethyltrimethylammoniumchlorid (METAC), (3-Methacrylamido)propyltrimethyl-ammoniumchlorid (MAPTAC), eingesetzt werden.

3. Verfahren nach Anspruch 1 oder 2, **dadurch gekennzeichnet, dass** die kationischen Schutzkolloide mindestens 10 Gew.-% Monomereinheiten mit quarternärer Ammoniumhalogenidgruppe, bezogen auf das Gesamtgewicht des kationischen Schutzkolloids, enthalten.

4. Verfahren nach Anspruch 1 bis 3, **dadurch gekennzeichnet, dass** 80 bis 100 Gew.-% der Halogenidionen, jeweils bezogen auf das Gesamtgewicht der Halogenidionen im kationischen Schutzkolloid, gegen Nichthalogenid-Anionen ausgetauscht sind.

5. Verfahren nach Anspruch 1 bis 4, **dadurch gekennzeichnet, dass** die Trocknungshilfe in einer Menge von 0,1 bis 20 Gew.-%, jeweils bezogen auf die polymeren Bestandteile der Dispersion, eingesetzt wird.

6. Verfahren nach Anspruch 1 bis 5, **dadurch gekennzeichnet, dass** das kationische Schutzkolloid als alleinige Trocknungshilfe eingesetzt wird.

7. Verfahren nach Anspruch 1 bis 6, **dadurch gekennzeichnet, dass** eine Kombination aus kationischem Schutzkolloid und nichtionischem Schutzkolloid eingesetzt wird, mit einem Gewichtsverhältnis von kationischem Schutzkolloid zu nichtionischen Schutzkolloid von 90 : 10 bis 10 : 90.

8. Verfahren nach Anspruch 1 bis 7, **dadurch gekennzeichnet, dass** für die Herstellung der wässrigen Polymerdispersion ein oder mehrere ethylenisch ungesättigte Monomere eingesetzt werden aus der Gruppe enthaltend Vinylester von unverzweigten oder verzweigten Alkylcarbonsäuren mit 1 bis 15 C-Atomen, Methacrylsäureestern und Acrylsäureestern von Alkoholen mit 1 bis 15 C-Atomen, Vinylaromaten, Olefine, Diene und Vinylhalogenide.

9. In Wasser redispergierbare Polymerpulver-Zusammensetzungen mit kationischer Funktionalität hergestellt mittels einem der Verfahren nach Anspruch 1 bis 8.

10. Verwendung der in Wasser redispergierbare Polymerpulver-Zusammensetzungen mit kationischer Funktionalität aus Anspruch 9 in bauchemischen Produkten für die Herstellung von Bauklebern, Putzen, Spachtelmassen, Fußbodenspachtelmassen, Verlaufsmassen, Dichtschlämmen, Fugenmörtel und Farben.

## Claims

1. Process for producing water-redispersible polymer powder compositions having cationic functionality, by radically polymerizing one or more ethylenically unsaturated monomers in the presence of protective colloid and/or emulsifier in an aqueous medium, and drying the resulting aqueous polymer dispersion after addition of a catonic protective colloid as drying aid, **characterized in that** said cationic protective colloid used comprises homopolymers or copolymers of one or more cationic monomers having a quaternary ammonium halide group, with 50 wt% to 100 wt% of the halide ions in the quaternary ammonium halide groups having been replaced by nonhalide anions, and with the fraction of halide ions being less than 1 wt%, based on the total weight of the polymer powder composition.

2. Process according to Claim 1, **characterized in that** said cationic protective colloid used comprises homopolymers or copolymers of one or more cationic monomers from the group encompassing diallyldimethylammonium chloride (DADMAC), diallyldiethylammonium chloride (DADEAC), (3-methacryloyloxy)propyltrimethylammonium chloride (MPTAC),(2-methacryloyloxy)ethyltrimethylammonium chloride (METAC), (3-methacrylamido)propyltrimethylammonium chloride (MAPTAC).

3. Process according to Claim 1 or 2, **characterized in that** the cationic protective colloids comprise at least 10 wt% of monomer units having a quaternary ammonium halide group, based on the total weight of the cationic protective colloid.

4. Process according to Claim 1 to 3, **characterized in that** 80 to 100 wt% of the halide ions, based in each case on the total weight of the halide ions in the cationic protective colloid, have been replaced by nonhalide anions.

5. Process according to Claim 1 to 4, **characterized in that** the drying aid is used in an amount of 0.1 to 20 wt%, based in each case on the polymeric constituents of the dispersion.

6. Process according to Claim 1 to 5, **characterized in that** the cationic protective colloid is used as sole drying aid.

7. Process according to Claim 1 to 6, **characterized in that** a combination of cationic protective colloid and nonionic protective colloid is used, having a weight ratio of cationic protective colloid to nonionic protective colloid of 90:10 to 10:90.

8. Process according to Claim 1 to 7, **characterized in that** the aqueous polymer dispersion is prepared using one or more ethylenically unsaturated monomers from the group containing vinyl esters of unbranched or branched alkyl carboxylic acids having 1 to 15 C atoms, methacrylic esters and acrylic esters of alcohols having 1 to 15 C atoms, vinylaromatics, olefins, dienes, and vinyl halides.

9. Water-redispersible polymer powder composition having cationic functionality, produced by means of one of the processes according to Claim 1 to 8.

10. Use of the water-redispersible polymer powder composition having cationic functionality from Claim 9 in chemical construction products for the production of construction adhesives, renders, filling compounds, floor-filling compounds, leveling compounds, grouts, jointing mortars, and paints.

## Revendications

1. Procédé de fabrication de compositions de poudre polymère redispersibles dans l'eau à fonctionnalité cationique, selon lequel un ou plusieurs monomères éthyléniquement insaturés sont polymérisés par voie radicalaire en présence d'un colloïde protecteur et/ou d'un émulsifiant dans un milieu aqueux, et la dispersion aqueuse de polymère obtenue est séchée après l'ajout d'un colloïde protecteur cationique en tant qu'adjuvant de séchage, **caractérisé en ce que** des homo- ou copolymères d'un ou de plusieurs monomères cationiques contenant un groupe halogénure d'ammonium quaternaire sont utilisés en tant que colloïde protecteur cationique, 50 % en poids à 100 % en poids des ions halogénure des groupes halogénure d'ammonium quaternaires étant remplacés par des anions non-halogénure, et la proportion d'ions halogénure étant inférieure à 1 % en poids, par rapport au poids total de la composition de poudre polymère.

2. Procédé selon la revendication 1, **caractérisé en ce que** des homo- ou copolymères d'un ou de plusieurs monomères cationiques du groupe comprenant le chlorure de diallyldiméthylammonium (DADMAC), le chlorure de diallyldiéthylammonium (DADEAC), le chlorure de (3-méthacryloxy)propyltriméthylammonium (MPTAC), le chlorure de (2-méthacryloxy)éthyltriméthylammonium (METAC), le chlorure de (3-méthacrylamido)propyltriméthyl-ammonium (MAPTAC), sont utilisés en tant que colloïde protecteur cationique.

3. Procédé selon la revendication 1 ou 2, **caractérisé en ce que** les colloïdes protecteurs cationiques contiennent au moins 10 % en poids d'unités monomères contenant un groupe halogénure d'ammonium quaternaire, par rapport au poids total du colloïde protecteur cationique.

4. Procédé selon les revendications 1 à 3, **caractérisé en ce que** 80 à 100 % en poids des ions halogénure, à chaque fois par rapport au poids total des ions halogénure dans le colloïde protecteur cationique, sont remplacés par des anions non-halogénure.

5. Procédé selon les revendications 1 à 4, **caractérisé en ce que** l'adjuvant de séchage est utilisé en une quantité de 0,1 à 20 % en poids, à chaque fois par rapport aux constituants polymères de la dispersion.

6. Procédé selon les revendications 1 à 5, **caractérisé en ce que** le colloïde protecteur cationique est utilisé en tant qu'adjuvant de séchage unique.

7. Procédé selon les revendications 1 à 6, **caractérisé en ce qu'**une combinaison d'un colloïde protecteur cationique et d'un colloïde protecteur non ionique est utilisée, avec un rapport en poids entre le colloïde protecteur cationique et le colloïde protecteur non ionique de 90:10 à 10:90.

8. Procédé selon les revendications 1 à 7, **caractérisé en ce qu'**un ou plusieurs monomères éthyléniquement insaturés du groupe contenant les esters de vinyle d'acides alkylcarboxyliques non ramifiés ou ramifiés de 1 à 15 atomes C, les esters de l'acide méthacrylique et les esters de l'acide acrylique d'alcools de 1 à 15 atomes C, les composés aromatiques de vinyle, les oléfines, les diènes et les halogénures de vinyle, sont utilisés pour la fabrication de la dispersion aqueuse de polymère.

9. Compositions de poudre polymère redispersibles dans l'eau à fonctionnalité cationique, fabriquées par un des procédés selon les revendications 1 à 8.

10. Utilisation des compositions de poudre polymère redispersibles dans l'eau à fonctionnalité cationique selon la revendication 9 dans des produits chimiques de construction pour la fabrication de colles de construction, d'enduits, d'apprêts à la spatule, d'apprêts à la spatule pour le sol, de masses de lissage, de mortiers d'étanchéité, de mortiers à joint et de peintures.
